# EUROPEAN PATENT SPECIFICATION

(11) **EP 4 646 398 B1**
(45) Date of publication and mention of the grant of the patent: **21.10.2026**
(21) Application number: 24700486.4
(22) Date of filing: 02.01.2024
(51) Int. Cl.: C05C 1/00, C01C 1/04, C01C 1/18, C01C 1/28, F01K 3/00, F03G 6/06

(54) **PROCESS AND SYSTEM FOR CARBON-FREE FERTILIZER PRODUCTION AND GRID BALANCING**
VERFAHREN UND SYSTEM ZUR HERSTELLUNG VON KOHLENSTOFFFREIEM DÜNGEMITTEL UND ZUM GITTERAUSGLEICH
PROCÉDÉ ET SYSTÈME DE PRODUCTION D'ENGRAIS SANS CARBONE ET D'ÉQUILIBRAGE DE RÉSEAU

(30) Priority: 04.01.2023 US 202318150102
(43) Date of publication of application: 12.11.2025
(73) Proprietor: ATLAS AGRO HOLDING AG, 6300 Zug (CH)
(72) Inventor: ØSTBØ, Petter, 6340 BAAR (CH); SKJERVE, Ottar Bernt, 1352 Baar (NO)
(74) Representative: Santi, Filippo
(86) International application number: PCT/IB2024/050018
(87) International publication number: WO 2024/147082

(56) References cited:
- CN-A- 113 187 682
- US-A1- 2018 347 406
- US-A1- 2020 148 547
- US-A1- 2021 300 759
- ANONYMOUS: "Integrated Pollution Prevention and Control", EUROPEAN COMMISSION DOCUMENT, 1 August 2007 (2007-08-01), EU, pages 1 - 418, XP055701476, Retrieved from the Internet <URL:https://eippcb.jrc.ec.europa.eu/sites/default/files/2019-11/lvic_aaf.pdf> [retrieved on 20200605]
- THYSSENKRUPP UHDE CHLORINE ENGINEERS GMBH DR CHRISTOPHER PAPILE ET AL: "Photovoltaic-Generated CO2-Free Ammonia Apparatus and Operation Method", PRIOR ART PUBLISHING GMBH, PRIOR ART PUBLISHING GMBH, MANFRED-VON-RICHTHOFEN-STR. 9, 12101 BERLIN GERMANY, vol. www.priorartregister.com, 21 February 2019 (2019-02-21), pages 1 - 8, XP007022403
- LOVEGROVE KEITH ET AL: "Renewable Energy Options for Industrial Process Heat - Appendices", AUSTRALIAN RENEWABLE ENERGY AGENCY REPORT, 1 November 2019 (2019-11-01), pages 1 - 142, XP055903783, Retrieved from the Internet <URL:https://arena.gov.au/assets/2019/11/appendices-renewable-energy-options-for-industrial-process-heat.pdf> [retrieved on 20220322]

## Description

### TECHNICAL FIELD

This invention relates to a process for grid-scale energy storage leveraging the integrated production process of zero-carbon nitrogen-based fertilizers. More specifically, the invention relates to an integrated process for the production of nitrogen-based fertilizers from renewable resources and storage of large amounts of electrical energy therein.

### BACKGROUND ART

Nitrogen is a crucial ingredient for promoting the growth and development of plant life. Ammonia is one of the most abundantly manufactured inorganic compounds due to its vast range of applications. It is extensively used in the fertilizer industry as building blocks for the creation of a wide range of other chemicals. In 2021 alone, more than 150 million metric tons of ammonia was produced globally.

Conventionally, various hydrocarbon feedstocks, including natural gas, coal, and oil, are used to make ammonia. More than 95% of the tonnage of ammonia is produced using natural gas. Most of the ammonia produced is used to manufacture nitrogen-based fertilizers. Of all the frequently used solid nitrogenous fertilizers, ammonium nitrate-based fertilizers are the most advantageous. Compared to urea, ammonium nitrate has the benefit of being able to be top-dressed onto the soil's surface and left exposed without the risk of ammonia evaporation into the atmosphere. When urea is left exposed on the soil's surface, ammonia that is released during the hydrolysis of the urea causing nitrogen to be lost. Only very calcareous soils are likely to experience such losses with ammonium nitrate.

Industrial facilities that produce ammonia and fertilizers based on ammonia often have high feedstock prices, high energy needs, and significant carbon emissions. Present carbon-based fertilizers such as urea come with a toll of carbon emission, which results in a greenhouse effect. Producing "green" (zero-carbon fertilizers) from renewable energy will be an important contribution to reducing CO₂ emissions from the food value chain. However, with renewable resources such as wind and solar power plants, there is always a problem associated with large fluctuations in power generation due to their intermittent nature. This needs to be compensated for to obtain an efficient utilization of power used in the industry. US 2020/148547 A1 relates to producing NH3, Urea, UAN and DAP from intermittent renewable energy, water and phosphorous, O2 and H2 derived from water electrolysis, N2 derived from an air separator and supplementary electricity and steam derived from molten salt thermal energy storage system.

Current grid power balancing alternatives like pumped storage hydropower, hydrogen fuel cells, and batteries are quite expensive and entail high power losses. Therefore, there remains a need in the art to create novel highly efficient processes for producing ammonia and nitrogen-based fertilizers using renewable power sources with reduced costs and zero-carbon emissions.

### SUMMARY OF THE INVENTION

In accordance with the first aspect of the present invention, a process for producing a zero-carbon fertilizer is provided. The process comprises the steps of (a) producing and storing hydrogen; (b) producing and storing nitrogen; (c) producing ammonia by reacting the hydrogen and the nitrogen and storing liquid ammonia; (d) producing and storing nitric acid; and (e) neutralizing nitric acid with ammonia to obtain aqueous ammonium nitrate; wherein the steps (a) and (b) are provided with an energy from a renewable source of power, and wherein energy is recovered from the steps (c), (d) and (e), and wherein energy is recovered from said (c), (d) and (e), and wherein the recovered energy from at least one of said (c), (d) is at least partly converted to electrical power, and wherein the electrical power is stored in a replenishable battery storage and supplied to at least one of said (a) and (b), when required, and wherein the remaining recovered energy from said (c) and (d), together with the recovered energy from said (e) is converted to thermal power.

In an embodiment, the present invention provides that the hydrogen is produced by electrolysis of water and hydrogen produced in excess is stored, and withdrawn on demand for ammonia production when hydrogen production is less than required due to low power generation from the renewable source of power.

In an embodiment, the present invention provides that the nitrogen is produced in a nitrogen plant comprising an Air Separation Unit (ASU) by cryogenic air separation or vacuum pressure swing absorption (VPSA) from the atmosphere. The nitrogen in excess is sent to a liquefier to produce liquid nitrogen (LIN) and stored in a liquid nitrogen storage, and withdrawn on demand for ammonia production when less than 100% of power is supplied from the renewable source of power.

In an embodiment, the present invention provides that the hydrogen and nitrogen are reacted in a ratio of 3:1 for producing ammonia. The traces of oxygen in the ammonia production are removed by catalytic oxidation at ambient temperature in a separate catalytic oxidation (catox) reactor.

In an embodiment, the ammonia is mixed with compressed air, passed over catalytic, platinum gauzes in a reactor at 900-1000° C and a pressure range 5-15 bar a to produce a mixture of nitrogen monoxide (NO) and nitrogen dioxide (NO2). Any excess ammonia produced is transmitted to an ammonia storage (480), which further enables the supply of ammonia for nitric acid synthesis and/or other process stages as required.

In an embodiment, the nitrogen is oxidized to NO₂ which is then absorbed in water to form about 60 to 68 % w/w nitric acid (HNO₃). Surplus nitric acid from the nitric acid production is transferred to a nitric acid storage (580) and can be withdrawn as and when required.

In an embodiment, the present invention provides that the steps of the process require at least one renewable source of power; the renewable source of power is selected from solar photovoltaic power, hydro-electric power, wind power, and battery storage. Particularly, the process produces heat energy in ammonia and nitric acid production, which can be converted to electrical power and the electrical power, in turn, fed back to the process steps. In an embodiment, the electrical power is supplied to at least one of hydrogen production and nitrogen production. The electrical power produced from the steps (c) and (d) is stored in a replenishable battery storage for intermittent storage of electricity. In an embodiment, the by-product gaseous oxygen from hydrogen production and nitrogen production is supplied to nitric acid production. In an embodiment, the electrical power is used in a grid balancing system.

In accordance with another aspect of the present invention, a system for producing a zero-carbon fertilizer is provided. The system comprises:
(a) a hydrogen plant configured to produce and store hydrogen;
(b) a nitrogen plant configured to produce and store nitrogen;
(c) an ammonia plant configured to produce and store ammonia;
(d) a nitric acid plant configured to produce and store nitric acid; and
(e) an ammonium nitrate plant configured to produce ammonium nitrate; wherein elements (a)-(b) are configured to be provided with an energy from a renewable source of power, and wherein elements (c)-(e) are configured to recover energy therefrom.

The system further comprises a local electricity grid configured to supply electrical power to the system.

The present invention provides that the system further comprises a steam grid configured to produce steam, supply and store thermal power.

The present invention provides that the steam grid comprises steam generators, an electric auxiliary steam boiler, and a solar steam boiler for startup and supply steam to the plant steam grid, when required. The surplus steam from plants and steam generators is stored in a thermal power storage plant. Any excess electrical power generated from the ammonia and nitric acid plants are utilized and recycled back into the process steps.

The hydrogen plant comprises an electrolyzer. The electrolyzer is selected from polymer electrolyte membrane electrolyzers, alkaline electrolyzers, and solid oxide electrolyzers. The hydrogen plant is further connected to a hydrogen storage configured to store excess hydrogen.

In an embodiment, the nitrogen plant is configured to produce liquid nitrogen (LIN) from excess gaseous nitrogen (GAN) produced by the nitrogen plant. A liquid nitrogen storage is provided for the storage of liquid nitrogen (LIN).

The ammonia plant is configured to store any excess ammonia produced in an ammonia storage which enables the supply of ammonia for nitric acid synthesis and/or other process stages as required.

The nitric acid plant is further connected to a nitric acid storage configured to store excess nitric acid. The nitric acid is withdrawn from the nitric acid storage in case the ammonia production is lower than demand in the downstream neutralization step. The product oxygen from the ASU or the water electrolysis is vented or sent to the nitric acid plant.

### BRIEF DESCRIPTION OF THE DRAWINGS

The illustrated embodiments of the subject matter will be best understood by reference to the drawings, wherein like parts are designated by like numerals throughout. The following description is intended only by way of example, and simply illustrates certain selected embodiments of devices, systems, and processes that are consistent with the subject matter as claimed herein.

Embodiments of the present disclosure will now be described, by way of example only, with reference to the following drawings wherein:

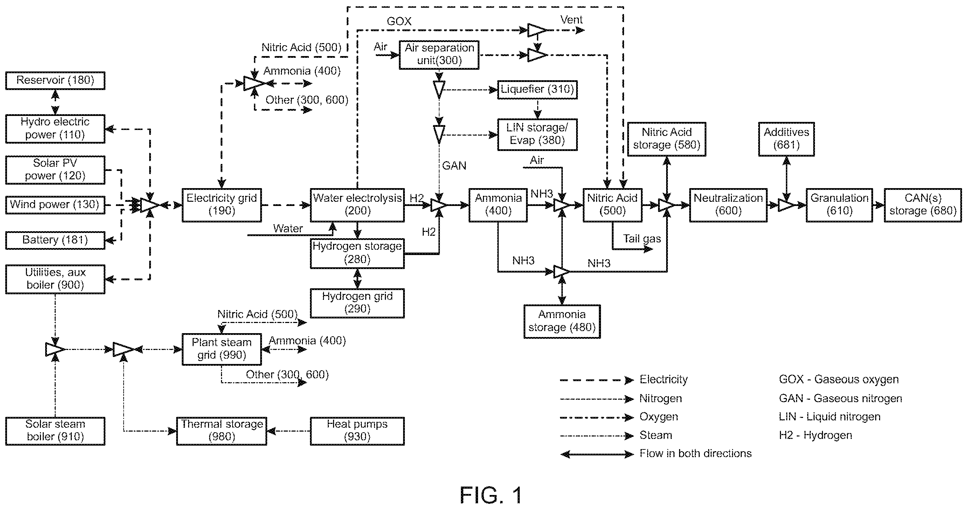

**FIG. 1** illustrates a schematic block flow diagram of a process for carbon-free fertilizer production and grid balancing according to the present invention.

The following reference numerals are used in the description and figures:
110 - Hydroelectric Power Plant
120 - Solar Photovoltaic Power Plant
130 - Wind Power Plant
180 - Reservoir
181 - Replenishable Battery Storage
190 - Local Electricity Grid
200 - Hydrogen Plant
280 - Hydrogen Storage
290 - Hydrogen Grid
300 - Nitrogen Plant
310 - Liquefier
380 - Liquid Nitrogen Storage
480 - Ammonia Storage
500 - Nitric Acid Plant
580 - Nitric Acid Storage
600 - Ammonium Nitrate Plant
610 - Granulation Section
680 - Calcium Ammonium Nitrate (CAN) Storage
681 - Additive Storage
910 - Solar Steam Boiler
930 - Heat Pumps
980 - Thermal Power Storage
990 - Plant Steam Grid
Subscripts:
   g - gas
   l - liquid
   aq - aqueous

### DETAILED DESCRIPTION OF THE EMBODIMENTS

The following description is presented to enable any person skilled in the art to make and use the invention as claimed and is provided in the context of the particular examples discussed below, variations of which will be readily apparent to those skilled in the art. In the interest of clarity, not all features of an actual implementation are described in the given specification. It will be appreciated that in the development of any such actual implementation (as in any development project), design decisions must be made to achieve the designers' specific goals (e.g., compliance with system- and business-related constraints), and that these goals will vary from one implementation to another.

Example apparatus are described herein. Other example embodiments or features may further be utilized, and other changes may be made, without departing from the scope of the subject matter presented herein. In the following detailed description, reference is made to the accompanying drawings, which form a part thereof.

The example embodiments described herein are not meant to be limiting. It will be readily understood that the aspects of the present disclosure, as generally described herein, and illustrated in the drawings, can be arranged, substituted, combined, separated, and designed in a wide variety of different configurations, all of which are explicitly contemplated herein.

The applicants have developed a novel integrated process for an efficient carbon- free fertilizer production from renewable resources which in turn generates utilizable electrical power for grid balancing.

In accordance with the first aspect of the present invention, a process for producing a zero-carbon fertilizer is provided. The process comprises the steps of (a) producing hydrogen; (b) producing nitrogen; (c) producing ammonia by reacting the hydrogen and the nitrogen; (d) producing nitric acid; and (e) neutralizing nitric acid with ammonia to obtain ammonium nitrate; wherein the steps (a) and (b) are provided with an energy from a renewable source of power, and wherein energy is recovered from the steps (c), (d) and (e).

Referring to FIG. 1, there is provided a simplified process description of the fertilizer production process, according to one aspect of the present invention. According to an embodiment, at least one renewable resource including, but not limited to, a hydroelectric power plant (110), a solar photovoltaic power plant (120), and a wind power plant (130), provides electrical power to a local electricity grid (190). A replenishable battery storage (181), for example, a Li-ion battery, is installed for intermittent storage of electricity and providing electrical power to the local electricity grid and to the process plants (190) whenever required during the process of the preparation of the fertilizer in accordance with the embodiments of the present invention. The replenishable battery storage (181) can receive electrical power from any or all of the aforementioned at least one renewable resource. It is known to a person skilled in the art to employ other resources of renewable energy. Non- limiting examples of such other resources of renewable energy are nuclear power and tidal power.

In an embodiment, wherein the local electricity grid (190) is connected to the hydroelectric power plant (110), any surplus power generated in the plants is used to pump water to a reservoir (180) used for hydroelectric power production whenever required.

The present invention provides a process for producing a zero-carbon fertilizer without any carbon source or any renewable resource such as waste products like food waste, industry waste, fossil fuel etc. In the present invention a carbon-free fertilizer is formed by a series of reactions such as production of hydrogen from water, production or separation of nitrogen from atmosphere, producing ammonia, producing nitric acid and neutralizing nitric acid with ammonia to form ammonium nitrate.

The integrated fertilizer manufacturing process, according to one embodiment of the present invention, includes, but is not limited to, hydrogen production, nitrogen production, ammonia production, nitric acid generation, neutralization, and granulation. Each of these steps, in an example embodiment, involves separate individual plants/sections for their respective production or processing, such as a hydrogen plant (200) for hydrogen production, a nitrogen plant (300) for nitrogen production, an ammonia plant (400) for ammonia production, a nitric acid plant (500) for nitric acid production, an ammonium nitrate plant (600) for neutralization, and a granulation section (610) for granulation. The local energy grid (190) supplies power to any or all of the separate plants/sections. In one example, the hydrogen plant (200), nitrogen plant (300), ammonia plant (400), nitric acid plant (500), ammonium nitrate plant (600), and granulation section (610) receive power from the local electricity grid (190). For example, when the local electricity grid (190) is linked to the hydroelectric power plant (110), any surplus power created in the plants is utilized to pump water to a reservoir (180), which is used for hydroelectric power generation whenever necessary.

In view of the above, it is concluded that the technology of the present invention is selected in such a way that for example, the steam production balances the steam consumption in the ammonium nitrate plant.

Therefore, the process of the present invention provides an efficient, balanced and a green process for the production of carbon-free fertilizer. Moreover, in the process of the present invention, the energy generated in any step such as during the formation of ammonia, nitric acid, and ammonium nitrate is utilized within the process in the formation of the carbon- free fertilizer. The excess of any of the reagents, such as, hydrogen, nitrogen, ammonia, and nitric acid is stored and utilized at a later stage, when such reagent is not produced in the process due to lack of electrical power or any other reason.

Accordingly, the present invention provides for a process and a grid balancing system which reduce carbon emissions/carbon footprint utilizing renewable energy resources. Further, the present invention is self-sufficient to manage energy/power storage or any surplus formation of any of the product/reagent.

The preparation of a carbon-free fertilizer in accordance with an embodiment of the present invention comprises the steps as elaborated below:

### Hydrogen production and storage:

In one embodiment of the invention, electrical power from the local power grid (190) is delivered to a hydrogen plant (200), which includes an electrolyzer (not shown) for hydrogen generation. In this process, water is electrolyzed in an electrolyzer to separate its constituent element gases hydrogen and oxygen. The electrolyzer is selected from the group consisting of, but not limited to, polymer electrolyte membrane electrolyzers, alkaline electrolyzers, and solid oxide electrolyzers.

Further, the hydrogen plant (200) is linked to a hydrogen storage (280) and the hydrogen storage (280) is connected to a public hydrogen grid (290). Any excess hydrogen generated is transmitted to the public hydrogen grid (290), which serves to balance the grid and satisfy hydrogen demand, whenever required. Hydrogen from the hydrogen storage (280) and/or the public hydrogen grid (290) is withdrawn for ammonia synthesis and/or other process stages as required.

In one example, the hydrogen storage (280) is arranged to provide a continuous supply of hydrogen for the process of the present invention even when the local electricity grid (190) is unavailable for hydrogen generation.

A typical hydrogen plant (200) may utilize a particular megawatt of electrical power in 24 hours. The solar photovoltaic power plant (120) generates electrical power only during specific hours of the day due to its intermittent nature. To overcome the situation, the solar photovoltaic power plant (120) is designed to generate at least twice the electrical power necessary for the hydrogen production while also supplying power to the local electricity grid (190). Excess hydrogen generated is stored in the hydrogen storage (280) and/or the public hydrogen grid (290). For the remainder of the day, when no electrical power is generated by the solar photovoltaic power plant (120), the extra hydrogen stored in the hydrogen storage (280), and/or the public hydrogen grid (290) is supplied to the subsequent steps. It is advantageous to store excess hydrogen over other methods of storing electricity such as a pumped-storage hydropower as the losses are minimal compared to a minimum of 15% in pumped-storage hydropower.

Further, in an example, in order to boost the process efficiency, byproduct gaseous oxygen (GOX) from the hydrogen production stage is supplied to the nitric acid synthesis step in one embodiment. In another embodiment, the gaseous oxygen (GOX) is simply vented out.

### Nitrogen production and storage:

Further, the present invention provides electrical power from the local electricity grid (190) to a nitrogen plant (300) that comprises an air separation unit (ASU) for nitrogen production. The air separation unit (ASU) separates the three main components of air - nitrogen, oxygen, and argon.

A typical air separation unit (ASU) employs technologies such as cryogenic air separation (CAS) or vacuum pressure swing absorption (VPSA). In an embodiment, the air separation unit (ASU) produces gaseous nitrogen (GAN). Excess gaseous nitrogen (GAN) produced by cryogenic air separation (CAS) is transferred to a liquefier (310) to produce liquid nitrogen (LIN) which is stored in a liquid nitrogen storage (380).

In the event of a GAN shortage, this LIN may be vaporized in air vaporizers or by using low grade heat available from the ammonia production and/or the nitric acid production step and transferred for ammonia production.

In an embodiment, to boost the process efficiency, byproduct gaseous oxygen (GOX) from the nitrogen production or hydrogen production is supplied to the nitric acid plant (500) to improve process and energy efficiency. In another embodiment, the gaseous oxygen (GOX) is simply vented out.

### Ammonia production and storage:

Ammonia is produced by the reaction of nitrogen and hydrogen gases according the following reaction (1):

N2 + 3H2 → 2NH3 ... (1)

In one embodiment of the present invention, hydrogen from the hydrogen plant (200) is reacted with nitrogen from the nitrogen plant (300) in an ammonia plant (400). The hydrogen-to-nitrogen ratio is ideally to be 3:1. In the process of the preparation of ammonia, the plant may contain traces of oxygen in the gas mixture that might poison the ammonia synthesis catalyst. The traces of the oxygen are eliminated by catalytic oxidation at ambient temperature in a separate catalytic oxidation (catox) reactor. The gas from the catox reactor is compressed to 100-300 bar a and transferred to the ammonia plant (400), wherein hydrogen reacts with nitrogen to generate ammonia over a promoted iron catalyst at 450-550°C. In other embodiments, any other suitable catalyst other than iron catalyst may be used for the preparation of ammonia.

The ammonia reaction is exothermic. Following the ammonia plant (400), the gas is cooled down in subsequent process stages to separate liquid ammonia from the circulating reaction gas. The liquid is sent to the nitric acid and ammonium nitrate plants. Any excess ammonia produced is transmitted to an ammonia storage (480), which further enables the supply of ammonia for nitric acid synthesis and/or other process stages as required. If the ammonia output is less than the demand in the downstream nitric acid plant (500) or ammonium nitrate plant (600), liquid ammonia is utilized from the ammonia storage (480).

A first high-pressure heat recovery and steam generation section (HP HRSG) is utilized to recover a first heat energy from the ammonia plant (400) and generate a first high pressure steam. The first high-pressure steam is converted to mechanical power in a first high- pressure steam turbine and used for mechanical drives of the ammonia synthesis compressors. In an embodiment, the first high-pressure steam turbine is mechanically coupled with a first generator for a first electrical power generation.

Any surplus steam from the ammonia is sent to a steam grid (990) for storage, consumption, or conversion to electric power in steam turbine driven generators.

To respond to changes in power, hydrogen, and nitrogen production from upstream facilities, the ammonia synthesis is built with a high turn-down ratio, i.e., a low minimum running load or ON-OFF operation.

In an embodiment, the ammonia plant (400) is configured to vary its production, and to have its excess production stored. This allows the plant to reduce power consumption, but not stop production.

### Nitric acid production and storage:

Ammonia from the ammonia plant (400) or the ammonia storage (480) is sent to the nitric acid plant (500), where it is vaporized, heated, and mixed with compressed air before being passed over catalytic, platinum gauzes in a reactor at 900-1000° C and a typical pressure range of 5-15 bar a, where it reacts with oxygen to produce nitrogen monoxide (NO) and nitrogen dioxide (NO2). The reaction is highly exothermic.

Following the cooling of the reactor gas combination, NO is oxidized to NO₂ and absorbed in water to generate 60-68% w/w nitric acid (HNO3).

Ammonia is converted to nitric acid in two steps:

### Step 1:

In step 1, ammonia is oxidized by heating with oxygen in the presence of a catalyst such as platinum with about 10% rhodium, platinum metal on silica wool, copper or nickel to form nitric oxide (nitrogen (II) oxide) and water (as steam). The whole process follows the below reactions (2) and (3):

4 NH3 (g) + 5O₂ (g) → 4 NO (g) + 6 H₂O ... (2)

2 NO(g) + O₂ (g) → 2NO₂ (g) ... (3)

### Step 2:

In the next step, the reaction is carried out in an absorption apparatus containing water. Initially nitric oxide is oxidized again to yield nitrogen dioxide. This nitrogen dioxide is then readily absorbed by the water, yielding the desired product (nitric acid) according to the following reaction (4):

4 NO2 (g) + O₂ (g) + 2H₂O (l) → 4 HNO3 (aq) ... (4)

A second high-pressure heat recovery and steam generation section (HP HRSG) is used to recover a second heat energy from the nitric acid (500) and generate a second high- pressure steam. The second high-pressure steam is converted to mechanical power in a second high-pressure steam turbine and used for mechanical drives of the nitric acid plant (500). In an embodiment, the second high-pressure steam turbine is mechanically coupled with a second generator for a second electrical power generation.

Any surplus steam from the nitric acid plant (500) is delivered to a steam grid (990) in one embodiment for storage, consumption, or conversion to electric power in steam turbine driven generators. In another example, any excess steam is sent to a thermal power storage 980 for on-demand conversion to steam.

Surplus nitric acid from the nitric acid production is transferred to a nitric acid storage (580) in one embodiment. If the nitric acid output is lower than demand in the downstream ammonium nitrate plant (600), the stored nitric acid is withdrawn from the nitric acid storage (580).

Here, it is important to point out that the replenishable battery storage (181) allows for additional buffering of variable power supply, such as from an uncertain cloudy weather or variable wind gusts, by allowing the hydrogen, ammonia and, in particular, the nitric acid production processes to function as variable rate power plants linked to their storage tanks. For example, with an adequate ammonia storage (480), the nitric acid plant (500) may be built to ramp up and down nitric acid production in minutes, increasing or decreasing the power sent back to the electrolyzer from the integrated site and minimizing changes in production of electrical power supply.

The nitric acid plant (500) can ramp up beyond its fully levelled capacity (i.e., to produce more than the steady stream of ammonia) by drawing down on the ammonia storage (480) in order to produce extra power that can be fed back to the replenishable battery storage (181), extending the ability of the plant to produce on reduced power take.

### Ammonium nitrate production and storage:

The nitric acid produced is delivered to the ammonium nitrate plant (600), where ammonia reacts with nitric acid to generate an aqueous solution of ammonium nitrate (NH4NO3).

The production of ammonium nitrate follows the scheme of reaction (5) below:

HNO3 + NH3 → NH4NO3 ... (5)

The reaction between the ammonia and nitric acid is also exothermic. A low-pressure heat recovery and steam generation section is utilized to recover a third heat energy from the ammonium nitrate plant (600) and generate a low-pressure steam. In an embodiment, the low- pressure steam is partly or completely utilized to vaporize water from the aqueous ammonium nitrate solution to increase the ammonium nitrate concentration to 98% w/w before it is sent to the granulation section (610) to produce solid fertilizers.

In a further embodiment according to the invention, at least one additive, selected from the group consisting of coatings, fillers, and plant nutrients from an additive storage (681) is added to the process to meet safety related statutory requirements or user requirement with respect to plant nutrient value.

The final product, calcium ammonium nitrate (CAN), is stored in calcium ammonium nitrate (CAN) storage (680) before it is dispatched to customers.

The process of the present invention entails a net carbon-free fertilizer production as the entire process depends on renewable resources of power and any additional energy produced from any step of the process is utilized within the process or stored in a usable form.

In an embodiment, the process of the present invention is fully automated and remote control and operations of the process is possible. For example, the process can be controlled automatically following the demands of the grid, or the demands of the local renewable production.

A further expansion on this ability for remote and automatic control is that it may be linked to a set of learning algorithms that forecast the relevant parameters such as wind, solar radiation, power prices or other, in a way that allows the plant to not only react to physically present signals, but predict those signals and, therefore, optimally prepare. Non-limiting exemplary embodiments are learning algorithms predicting that power prices will be particularly low for a period of time, and therefore programmed to produce at maximum capacity through that period, or predicting that there will be a spike in available electricity at a period in the future, and ensuring that the replenishable battery storage (181) and as much as possible of other storages are available to store by then, ready to take as much as possible of the spike and so on.

Not wishing to be bound by theory, a typical state-of-the-art nitrogen fertilizer facility will have a power demand, typically of 270 MW, of which 245 MW may be required for the hydrogen plant (200) and 25 MW may be required for balance of plant (BoP) elements. Such a state-of-the-art fertilizer facility configuration is given below:
Total plant power consumption - 270 MW
- Electrolyzer power consumption - 245 MW
- Balance of plant power consumption - 25 MW
- Electrolyzer capacity / H2 production - 42,900 tons per annum / 4.9 tons per hour
- H2 storage - minimum required by technical process
- Ammonia production - 227 ktpa
- Fertilizer production - 650 ktpa

The state-of-the-art fertilizer facility requires constant supply of power to run the hydrogen plant (200) at 245 MW and the BoP at 25 MW. Any disruption in supply of power causes disruption in the fertilizer production.

A zero-carbon nitrogen fertilizer facility utilizing the process of the present invention adds flexibility to a conventional facility. For example, by increasing the hydrogen plant power consumption and thereby produce excess hydrogen, the hydrogen plant (200) can be disconnected from the grid for a predetermined period of time, for example, 1 - 24 hours per day, depending on the excess hydrogen produced and stored.

In an exemplary embodiment, wherein the hydrogen plant (200) is disconnected from the grid for three hours, the facility configuration is as given below:
- Total plant power consumption - 307 MW
- Electrolyzer power consumption - 282 MW
- Balance of plant power consumption - 25 MW
- Electrolyzer capacity / H2 production - 49,335 tons per annum / 5.6 tons per hour
- H2 storage - 15 tons
- Ammonia production - 227 ktpa
- Fertilizer production - 650 ktpa

Such configuration allows the plant to "overproduce and store" H2 during 20 hours of the day (0.7 tph or 15 tons in total) and "disconnect" from the grid for 3 hours a day and feed the ammonia plant (400) from the hydrogen storage (280) rather than from electrolyzer.

Net flexibility effect for the grid can be summarized as follows:
20 hours a day - power consumption of 307MW
3 hours a day - power consumption of 25MW

The additional cost incurred in setting up a facility according to the process of the present invention is US$ 67m which includes additional electrolyzer capacity and the hydrogen storage (280).

Based on a real-world data simulation (2016 - 2022 actual hourly realized power price of a major nuclear power plant in US MidWest region) facility according to the process of the present invention generates a net margin of US$ 5-7m per annum. At 6% discount rate typical for the industry net present value of such solution would be ~US$ 80-120m vs. US$67m investment.

It is worth noting that the example is illustrative and shows economics of only one arbitrarily chosen flexibility configuration (20-hour charge / 3-hour discharge cycle), while in reality it can be configured to the specific needs of a local grid.

An ordinary plant cannot stop taking power from the grid whilst running since not all BoP power consumers can be shut off. However, the process of the present invention can be configured to stop taking power, and even feed power generated back to the grid.

The electrolysis in the hydrogen plant (200) can be reduced to zero by utilizing the stored hydrogen. The ramp-down of electrolyzers takes less than a few minutes, thereby, minimizing or negating the main 280 MW load. By varying the size of the replenishable battery storage (181) buffering the plant, the replenishable battery storage (181) can be configured to easily take the load during the time the electrolyzers ramp down to zero, thus allowing instant stoppage of electricity demand.

In an embodiment of the process of the present invention, the process utilizes the storage of nitrogen to continue ammonia production, hence avoiding the need to run the nitrogen plant (300). This may be particularly useful when an ASU in the nitrogen plant (300) is down for maintenance or under repair. ASUs can be ramped down within minutes similar to the electrolyzer and the stored nitrogen be used.

The ammonia storage (480) allows the reduction of the ammonia production. This reduces the loads associated with ammonia production (12 MW) and associated cooling (6 MW).

Further, the ammonia storage (480) allows nitric acid production to continue even when the ammonia production ramps down. The standard nitric acid production level regenerates around 8 MW by leveraging the continued (but lower) ammonia stream and stored ammonia the nitric acid plant (500) can even be ramped up to a higher production level, and therefore also produce more than 8 MW.

There are, therefore, several power balancing features of the process of the present invention - the replenishable battery storage (181) that buffers immediate load differences and extends the running of BoP elements, the hydrogen storage (280) that allows ammonia to continue even if electrolyzers are slowed down or shut down, the liquid nitrogen storage (380) that allows stopping the ASU, the ammonia storage (480), that allows ramping up the nitric acid plant (500) and the associated power production, and the nitric acid storage (580) that allows even production of ammonium nitrate/CAN, as well as steam storage and pressure storage of hydrogen in the pipeline network.

In an embodiment of the process of the present invention, the fertilizer facility is configured to consume less power from the base power of, for example, 270 MW to, for example, 269 MW up to 0 MW. In the state-of-the-art fertilizer facilities, when hydrogen production is stopped, all BoP elements must stop until hydrogen production resumes. In the process of the present invention, however, the facility can continue running BoP elements from the nitric acid plant (500) power.

Further, as the process of the present invention utilizes the replenishable battery storage (181), short duration high loads can be fed back into the grid from the replenishable battery storage (181). For a longer duration, the plant can continue not taking 300 MW and even provide back to the grid a small excess power from the nitric acid plant (500).

The features of the process of the present invention are that it a) has multiple resources for storing power b) utilizes the regeneration of power combined with a replenishable battery storage and/or reduction of certain process steps (ASU, demineralized water production, ammonia production, cooling) to keep producing without having to rely on an external power source for a design period of time, where design can be any relevant time period only limited by capex cost (higher for more storage) vs. opex advantage (higher for more storage).

Further, in accordance with another aspect of the present invention, a grid balancing system for producing a zero-carbon fertilizer is disclosed. The system comprises a local electricity grid (190) configured to supply electrical power to the system, a steam grid (990) configured to produce steam and store thermal power, a hydrogen plant (200) configured to produce and store hydrogen, a nitrogen plant (300) configured to produce and store nitrogen, an ammonia plant (400) configured to produce and store ammonia, a nitric acid plant (500) configured to produce and store nitric acid, and an ammonium nitrate plant (600) configured to produce ammonium nitrate, a granulation plant (610) to produce and store finished products (CAN). The plants are provided with energy from a renewable source of power or a stored energy in the respective plants.

Electrical power is supplied to the local electricity grid (190) from hydroelectric (110), solar photovoltaic (PV) (120), wind (130) power plants and supplied with excess electric power from the ammonia (400) and nitric acid plants (500). The different power plants and process plants are connected to the local electricity grid (190). A replenishable battery storage (181) is installed for intermittent storage of electricity.

In an embodiment, wherein the local electricity grid (190) is connected to the hydroelectric power plant (110), any surplus power generated in the plants is used to pump water to a reservoir (180) used for hydroelectric power production whenever required.

Low grade energy from various process streams is upgraded using heat pumps (930) that are connected to a thermal power storage (980). Stored thermal power when available is converted to steam for power generation or consumed in the different plants when needed.

The hydrogen plant (200) comprising an electrolyzer is configured to produce and store hydrogen. The hydrogen plant (200) is linked to a hydrogen storage (280) and the hydrogen storage (280) is connected to a public hydrogen grid (290). The hydrogen storage (280) and the public hydrogen grid (290) are configured to store and transmit any excess hydrogen generated which serves to balance the grid and satisfy hydrogen demand, whenever required. Hydrogen from the hydrogen storage (280) and/or the public hydrogen grid (290) is withdrawn for ammonia synthesis and/or other process stages as required.

The nitrogen plant (300) comprising an air separation unit (ASU) is configured for nitrogen production and storage. A typical air separation unit (ASU) employs technologies such as cryogenic air separation (CAS) and vacuum pressure swing absorption (VPSA). In one version, the nitrogen plant (300) produces gaseous nitrogen (GAN). A liquefier (310) is configured to produce liquid nitrogen (LIN) from excess gaseous nitrogen (GAN) produced by the nitrogen plant (300), by cryogenic air separation (CAS). A liquid nitrogen storage (380) is provided for the storage of liquid nitrogen (LIN).

The ammonia plant (400) is provided for receiving hydrogen and nitrogen to produce and store ammonia. A first high-pressure heat recovery and steam generation section (HP HRSG) is configured to recover a first heat energy from the ammonia plant (400) and generate a first high-pressure steam. The first high-pressure steam is converted to mechanical power in a first high-pressure steam turbine and used for mechanical drives of the ammonia synthesis compressors. In an embodiment, the first high-pressure steam turbine is mechanically coupled with a first generator for a first electrical power generation. An ammonia storage (480) is configured to store excess ammonia.

The nitric acid plant (500) is provided to receive ammonia, compressed air and gaseous oxygen (GOX) to produce and store nitric acid. A second high-pressure heat recovery and steam generation section (HP HRSG) is configured to recover a second heat energy from the ammonia plant (400) and generate a second high-pressure steam. The second high- pressure steam is converted to mechanical power in a second high-pressure steam turbine and used for mechanical drives of the ammonia synthesis compressors. In an embodiment, the second high-pressure steam turbine is mechanically coupled with a second generator for a second electrical power generation. A nitric acid storage (580) is configured to store excess nitric acid. If the nitric acid output is lower than demand in the downstream ammonium nitrate plant (600), the stored nitric acid is withdrawn from the nitric acid storage (580).

The ammonium nitrate plant (600) is provided to facilitate neutralization reaction between ammonia and nitric acid for the production of aqueous ammonium nitrate. A low- pressure heat recovery and steam generation section is provided to recover a third heat energy from the ammonium nitrate plant (600) and generate a low-pressure steam. In an embodiment, the low-pressure steam is partly or completely utilized to vaporize water to increase the ammonium nitrate concentration to 98% w/w before it is sent to the granulation section (610) to produce and store solid fertilizers. A calcium ammonium nitrate (CAN) storage (680) is provided to store the final fertilizers.

The grid balancing system of the present invention is so designed that electrical power from at least one of the first electrical power generation, second electrical power generation, and third electrical power generation is configured to supply electrical power to at least one of the hydrogen plant (200), the nitrogen plant (300), and the local electricity grid (190). Additionally, the grid balancing system of the present invention provides for the storage of surplus electrical power in the plant. The stored electrical power can be used by the process of the present invention, when there is not generation/supply of the power or a higher amount of power is required by any of the steps of the present invention.

The grid balancing system of the present invention provides for storing the excess product from each step, which can be provided to the plant wherever required in case of lesser production or higher requirement of the product at that point of time during the process.

The grid balancing system of the present invention is configured to direct the by- product gaseous oxygen to the nitric acid plant (500) thereby improving the efficiency of the process.

The technology should be selected in such a way that the steam production balances the steam consumption in the ammonium nitrate plant (600).

In an embodiment, the grid balancing system of the present invention is configured to be fully automated and be operated under a remote control. For example, the grid balancing system can be controlled automatically following the demands of the grid, or the demands of the local renewable production.

A further expansion on this ability for remote and automatic control of the grid balancing system is that it may be linked to a set of learning algorithms that forecast the relevant parameters such as wind, solar radiation, power prices or other, in a way that allows the plant to not only react to physically present signals, but predict those signals and, therefore, optimally prepare. Non-limiting exemplary embodiments are learning algorithms predicting that power prices will be particularly low for a period of time, and therefore programmed to produce at maximum capacity through that period, or predicting that there will be a spike in available electricity at a period in the future, and ensuring that the replenishable battery storage (181) and as much as possible of other storages are available to store by then, ready to take as much as possible of the spike and so on.

It is to be understood that not necessarily all objectives or advantages may be achieved in accordance with any particular embodiment described herein. Thus, for example, those skilled in the art will appreciate that certain embodiments may be configured to operate in a manner that achieves or optimizes one advantage or group of advantages as taught herein without necessarily achieving other objects or advantages as may be taught or suggested herein.

Many other variations other than those described herein will be apparent from this disclosure. For example, depending on the embodiment, certain actions, events, or functions of any of the algorithms described herein may be performed in different sequences, and may be added, merged, or excluded altogether (e.g., not all described actions or events are required to execute the algorithm). Moreover, in certain embodiments, operations or events are performed in parallel, for example, through multithreading, interrupt handling, or through multiple processors or processor cores, or on other parallel architectures, rather than sequentially. In addition, different tasks or processes can be performed by different machines and/or computing systems that can work together.

Unless otherwise stated, conditional languages such as "can," "could," "will," "might," or "may" are understood within the context as used in general to convey that certain embodiments include, while other embodiments do not include, certain features, elements, and/or steps. Thus, such conditional languages are not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

Alternate implementations are included within the scope of the embodiments described herein in which elements or functions may be deleted, executed out of order from that shown, or discussed, including substantially concurrently or in reverse order, depending on the functionality involved as would be understood by those skilled in the art.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations.

It will be understood by those within the art that, in general, terms used herein, are generally intended as "open" terms (e.g., the term "including" should be interpreted as "including but not limited to," the term "having" should be interpreted as "having at least," the term "includes" should be interpreted as "includes but is not limited to," etc.).

For expository purposes, the term "horizontal" as used herein is defined as a plane parallel to the plane or surface of the floor of the area in which the system being described is used or the method being described is performed, regardless of its orientation. The term "floor" can be interchanged with the term "ground" or "water surface". The term "vertical" refers to a direction perpendicular to the horizontal as just defined. Terms such as "above," "below," "bottom," "top," "side," "higher," "lower," "upper," "over," and "under" are defined with respect to the horizontal plane.

As used herein, the terms "engaged," "connected," "coupled," and other such relational terms should be construed, unless otherwise noted, to include removable, moveable, fixed, adjustable, and/or releasable connections or attachments. The connections/attachments can include direct connections and/or connections having intermediate structure between the two components discussed.

Numbers preceded by a term such as "approximately," "about," and "substantially" as used herein include the recited numbers, and also represent an amount close to the stated amount that still performs a desired function or achieves a desired result. For example, the terms "approximately," "about," and "substantially" may refer to an amount that is within less than 10% of the stated amount. Features of embodiments disclosed herein preceded by a term such as "approximately," "about," and "substantially" as used herein represent the feature with some variability that still performs a desired function or achieves a desired result for that feature.

It should be emphasized that many variations and modifications may be made to the above-described embodiments, the elements of which are to be understood as being among other acceptable examples. All such modifications and variations are intended to be included herein within the scope of this disclosure and protected by the following claims.

## Claims

1. A process for producing a zero-carbon fertilizer, wherein the process comprises:
(a) producing hydrogen by electrolysis of water and storing hydrogen;
(b) producing and storing nitrogen;
(c) producing ammonia by reacting the hydrogen and the nitrogen and storing liquid ammonia;
(d) producing and storing nitric acid; and
(e) neutralizing nitric acid with ammonia to obtain aqueous ammonium nitrate,
wherein said (a) and (b) are provided with energy from a renewable source of power, and wherein energy is recovered from said (c), (d) and (e), and
wherein the recovered energy from at least one of said (c), (d) is at least partly converted to electrical power through conversion of surplus steam to electric power in steam turbine driven generators, and wherein the electrical power is stored in a replenishable battery storage and supplied to at least one of said (a) and (b), when required, and
wherein the remaining recovered energy from said (c) and (d), together with the recovered energy from said (e) is converted to thermal power.

2. The process as claimed in claim 1, wherein the excess of produced hydrogen is stored and withdrawn on demand for ammonia production.

3. The process as claimed in claim 1 or 2, wherein the nitrogen is produced by means of an Air Separation Unit (ASU).

4. The process as claimed in claim 3, wherein the nitrogen is produced by cryogenic air separation (CAS) or vacuum pressure swing absorption (VPSA).

5. The process as claimed in any of the preceding claims, wherein the excess of produced nitrogen is sent to a liquefier to produce liquid nitrogen (LIN) and stored in a liquid nitrogen storage.

6. The process as claimed in any of the preceding claims, wherein in step (c) hydrogen and nitrogen are reacted in a ratio of 3:1.

7. The process as claimed in any of the preceding claims, wherein the production of nitric acid in said (d) comprises mixing ammonia with compressed air, passing over catalytic, platinum gauzes in a reactor at 900 -1000° C and a pressure range 5-15 bar a to produce a mixture of nitrogen monoxide (NO) and nitrogen dioxide (NO2), and absorbing the nitrogen dioxide (NO2) in water to form nitric acid (HNO₃).

8. The process as claimed in any of the preceding claims, wherein the concentration of nitric acid produced is from 60 to 68 % w/w.

9. The process as claimed in any of the preceding claims, wherein the renewable source of power is selected from at least one of solar photovoltaic power, hydro-electric power, wind power, and replenishable battery storage.

10. The process as claimed in any of the preceding claims, wherein by-product gaseous oxygen from hydrogen production and nitrogen production is supplied to nitric acid production.

11. A system for producing a zero-carbon fertilizer comprising:
(a) a hydrogen plant configured to produce and store hydrogen, the hydrogen plant comprising an electrolyzer;
(b) a nitrogen plant configured to produce and store nitrogen;
(c) an ammonia plant configured to produce and store ammonia;
(d) a nitric acid plant configured to produce and store nitric acid; and
(e) an ammonium nitrate plant configured to produce ammonium nitrate;
wherein elements (a)-(b) are configured to be provided with an energy from a renewable source of power, and wherein elements (c)-(d) are configured to recover energy therefrom in the form of electrical power and thermal power, and
wherein the system further comprises a local electricity grid configured to store electrical power and to supply electrical power comprising replenishable batteries configured to store electrical power generated from c) and d) from conversion of surplus steam to electric power in steam turbine driven generators to at least one of the hydrogen plant and the nitrogen plant, when required, and a steam grid configured to produce steam and store thermal power and comprising steam generators, an electric auxiliary steam boiler and a solar steam boiler for startup and supply steam to the plant steam grid, when required and wherein the surplus steam from plants and steam generators is stored in a thermal power storage plant.

12. The system as claimed in claim 11, wherein the electrolyzer is selected from polymer electrolyte membrane electrolyzers, alkaline electrolyzers, and solid oxide electrolyzers.

13. The system as claimed in any of the preceding claims 11-12, wherein the hydrogen plant comprises a hydrogen storage configured to store excess hydrogen.

14. The system as claimed in any of the preceding claims 11-13, wherein the nitrogen plant comprises a liquid nitrogen storage configured to store excess nitrogen.

15. The system as claimed in any of the preceding claims 11-14, wherein the ammonia plant comprises an ammonia storage configured to store excess ammonia.

16. The system as claimed in any of the preceding claims 11-15, wherein the nitric acid plant comprises a nitric acid storage configured to store excess nitric acid.

## Patentansprüche

1. Verfahren zur Herstellung eines kohlenstofffreien Düngemittels, wobei das Verfahren umfasst:
(a) Erzeugen von Wasserstoff durch Elektrolyse von Wasser und Speichern des Wasserstoffs;
(b) Erzeugen und Speichern von Stickstoff;
(c) Erzeugen von Ammoniak durch Reagierenlassen des Wasserstoffs mit dem Stickstoff und Speichern von flüssigem Ammoniak;
(d) Erzeugen und Speichern von Salpetersäure; und
(e) Neutralisieren der Salpetersäure mit Ammoniak, um eine wässrige Ammoniumnitratlösung zu erhalten,
wobei (a) und (b) mit Energie aus einer erneuerbaren Energiequelle versorgt werden und wobei aus (c), (d) und (e) Energie zurückgewonnen wird, und wobei die aus mindestens einem von (c) und (d) zurückgewonnene Energie zumindest teilweise in elektrische Energie umgewandelt wird, indem überschüssiger Dampf mittels dampfturbinenbetriebener Generatoren in elektrische Energie umgewandelt wird, und wobei die elektrische Energie in einem wiederaufladbaren Batteriespeicher gespeichert und bei Bedarf mindestens einem von (a) und (b) zugeführt wird, und
wobei die verbleibende, aus (c) und (d) zurückgewonnene Energie zusammen mit der aus (e) zurückgewonnenen Energie in thermische Energie umgewandelt wird.

2. Verfahren nach Anspruch 1, wobei der Überschuss des erzeugten Wasserstoffs gespeichert und bei Bedarf zur Ammoniakherstellung entnommen wird.

3. Verfahren nach Anspruch 1 oder 2, wobei der Stickstoff mittels einer Luftzerlegungsanlage (Air Separation Unit, ASU) erzeugt wird.

4. Verfahren nach Anspruch 3, wobei der Stickstoff durch kryogene Luftzerlegung (CAS) oder Vakuum-Druckwechseladsorption (VPSA) erzeugt wird.

5. Verfahren nach einem der vorhergehenden Ansprüche, wobei der Überschuss des erzeugten Stickstoffs einem Verflüssiger zugeführt wird, um flüssigen Stickstoff (LIN) zu erzeugen, und in einem Flüssigstickstoffspeicher gespeichert wird.

6. Verfahren nach einem der vorhergehenden Ansprüche, wobei in Schritt (c) Wasserstoff und Stickstoff in einem Verhältnis von 3:1 miteinander zur Reaktion gebracht werden.

7. Verfahren nach einem der vorhergehenden Ansprüche, wobei die Herstellung von Salpetersäure gemäß (d) das Mischen von Ammoniak mit Druckluft, das Leiten über katalytische Platingaze in einem Reaktor bei 900-1000°C und einem Druckbereich von 5-15 bar, um ein Gemisch aus Stickstoffmonoxid (NO) und Stickstoffdioxid (NO2) zu erzeugen, und das Absorbieren des Stickstoffdioxids (NO2) in Wasser zur Bildung von Salpetersäure (HNO3) umfasst.

8. Verfahren nach einem der vorhergehenden Ansprüche, wobei die Konzentration der erzeugten Salpetersäure 60 bis 68 Gew.-% beträgt.

9. Verfahren nach einem der vorhergehenden Ansprüche, wobei die erneuerbare Energiequelle aus mindestens einer von photovoltaischer Solarenergie, Wasserkraft, Windenergie und einem wiederaufladbaren Batteriespeicher ausgewählt ist.

10. Verfahren nach einem der vorhergehenden Ansprüche, wobei gasförmiger Sauerstoff, der als Nebenprodukt bei der Wasserstoffherstellung und der Stickstoffherstellung anfällt, der Salpetersäureherstellung zugeführt wird.

11. System zur Herstellung eines kohlenstofffreien Düngemittels, umfassend:
(a) eine Wasserstoffanlage, die dazu ausgebildet ist, Wasserstoff zu erzeugen und zu speichern, wobei die Wasserstoffanlage einen Elektrolyseur umfasst;
(b) eine Stickstoffanlage, die dazu ausgebildet ist, Stickstoff zu erzeugen und zu speichern;
(c) eine Ammoniakanlage, die dazu ausgebildet ist, Ammoniak zu erzeugen und zu speichern;
(d) eine Salpetersäureanlage, die dazu ausgebildet ist, Salpetersäure zu erzeugen und zu speichern; und
(e) eine Ammoniumnitratanlage, die dazu ausgebildet ist, Ammoniumnitrat zu erzeugen;
wobei die Elemente (a)-(b) dazu ausgebildet sind, mit Energie aus einer erneuerbaren Energiequelle versorgt zu werden, und wobei die Elemente (c)-(d) dazu ausgebildet sind, daraus Energie in Form von elektrischer Energie und thermischer Energie zurückzugewinnen, und
wobei das System ferner ein lokales Stromnetz umfasst, das dazu ausgebildet ist, elektrische Energie zu speichern und elektrische Energie bereitzustellen, und wiederaufladbare Batterien umfasst, die dazu ausgebildet sind, die aus (c) und (d) durch Umwandlung von überschüssigem Dampf in elektrische Energie mittels dampfturbinenbetriebener Generatoren erzeugte elektrische Energie zu speichern und diese bei Bedarf mindestens einer von der Wasserstoffanlage und der Stickstoffanlage zuzuführen, sowie ein Dampfnetz, das dazu ausgebildet ist, Dampf zu erzeugen und thermische Energie zu speichern, und Dampfgeneratoren, einen elektrischen Hilfsdampfkessel und einen Solardampfkessel zum Anfahren und zur bedarfsgerechten Versorgung des Anlagendampfnetzes mit Dampf umfasst, wobei der überschüssige Dampf aus den Anlagen und den Dampferzeugern in einer Anlage zur Speicherung thermischer Energie gespeichert wird.

12. System nach Anspruch 11, wobei der Elektrolyseur ausgewählt ist aus Polymerelektrolytmembran-Elektrolyseuren, alkalischen Elektrolyseuren und Festoxidelektrolyseuren.

13. System nach einem der Ansprüche 11-12, wobei die Wasserstoffanlage einen Wasserstoffspeicher umfasst, der dazu ausgebildet ist, überschüssigen Wasserstoff zu speichern.

14. System nach einem der Ansprüche 11-13, wobei die Stickstoffanlage einen Flüssigstickstoffspeicher umfasst, der dazu ausgebildet ist, überschüssigen Stickstoff zu speichern.

15. System nach einem der Ansprüche 11-14, wobei die Ammoniakanlage einen Ammoniakspeicher umfasst, der dazu ausgebildet ist, überschüssiges Ammoniak zu speichern.

16. System nach einem der Ansprüche 11-15, wobei die Salpetersäureanlage einen Salpetersäurespeicher umfasst, der dazu ausgebildet ist, überschüssige Salpetersäure zu speichern.

## Revendications

1. Un procédé de production d'un engrais sans carbone, dans lequel le procédé comprend :
(a) la production d'hydrogène par électrolyse de l'eau et le stockage de l'hydrogène ;
(b) la production et le stockage d'azote ;
(c) la production d'ammoniac par réaction de l'hydrogène et de l'azote et le stockage d'ammoniac liquide ;
(d) la production et le stockage d'acide nitrique ; et
(e) la neutralisation de l'acide nitrique avec de l'ammoniac afin d'obtenir du nitrate d'ammonium aqueux,
dans lequel lesdites étapes (a) et (b) comportent énergie provenant d'une source de puissance renouvelable, et dans lequel de l'énergie est récupérée à partir desdites étapes (c), (d) et (e), et dans lequel l'énergie récupérée à partir d'au moins l'une desdites étapes (c), (d) est au moins partiellement convertie en puissance électrique par conversion de la vapeur excédentaire en puissance électrique dans des générateurs entraînés par turbine à vapeur, et dans lequel la puissance électrique est stockée dans un stockage par batteries rechargeables et fournie à au moins l'une desdites étapes (a) et (b), lorsque cela est nécessaire, et
dans lequel l'énergie récupérée restante provenant desdites étapes (c) et (d), conjointement avec l'énergie récupérée provenant de ladite étape (e), est convertie en puissance thermique.

2. Le procédé tel que revendiqué dans la revendication 1, dans lequel l'excédent d'hydrogène produit est stocké et prélevé à la demande pour la production d'ammoniac.

3. Le procédé tel que revendiqué dans la revendication 1 ou 2, dans lequel l'azote est produit au moyen d'une unité de séparation de l'air (ASU).

4. Le procédé tel que revendiqué dans la revendication 3, dans lequel l'azote est produit par séparation cryogénique de l'air (CAS) ou par adsorption modulée en pression sous vide (VPSA).

5. Le procédé tel que revendiqué dans l'une quelconque des revendications précédentes, dans lequel l'excédent d'azote produit est envoyé à un liquéfacteur afin de produire de l'azote liquide (LIN) et est stocké dans un stockage d'azote liquide.

6. Le procédé tel que revendiqué dans l'une quelconque des revendications précédentes, dans lequel, à l'étape (c), l'hydrogène et l'azote sont mis à réagir selon un rapport de 3 : 1.

7. Le procédé tel que revendiqué dans l'une quelconque des revendications précédentes, dans lequel la production d'acide nitrique à ladite étape (d) comprend le mélange d'ammoniac avec de l'air comprimé, le passage sur des toiles catalytiques en platine dans un réacteur à une température de 900-1000 °C et dans une plage de pression de 5-15 bar afin de produire un mélange de monoxyde d'azote (NO) et de dioxyde d'azote (NO2), et l'absorption du dioxyde d'azote (NO2) dans de l'eau afin de former de l'acide nitrique (HNO3).

8. Le procédé tel que revendiqué dans l'une quelconque des revendications précédentes, dans lequel la concentration de l'acide nitrique produit est comprise entre 60 et 68 % en poids.

9. Le procédé tel que revendiqué dans l'une quelconque des revendications précédentes, dans lequel la source de puissance renouvelable est sélectionnée entre au moins l'une d'une puissance solaire photovoltaïque, d'une puissance hydroélectrique, d'une puissance éolienne et d'un stockage par batteries rechargeables.

10. Le procédé tel que revendiqué dans l'une quelconque des revendications précédentes, dans lequel l'oxygène gazeux sous-produit provenant de la production d'hydrogène et de la production d'azote est fourni à la production d'acide nitrique.

11. Un système de production d'un engrais sans carbone comprenant :
(a) une usine d'hydrogène configurée pour produire et stocker de l'hydrogène, l'usine d'hydrogène comprenant un électrolyseur ;
(b) une usine d'azote configurée pour produire et stocker de l'azote ;
(c) une usine d'ammoniac configurée pour produire et stocker de l'ammoniac ;
(d) une usine d'acide nitrique configurée pour produire et stocker de l'acide nitrique ; et
(e) une usine de nitrate d'ammonium configurée pour produire du nitrate d'ammonium ;
dans lequel les éléments (a)-(b) sont configurés pour comporter énergie provenant d'une source de puissance renouvelable, et dans lequel les éléments (c)-(d) sont configurés pour récupérer de l'énergie à partir de ceux-ci sous forme de puissance électrique et de puissance thermique, et
dans lequel le système comprend en outre un réseau électrique local configuré pour stocker de la puissance électrique et pour fournir de la puissance électrique, comprenant des batteries rechargeables configurées pour stocker la puissance électrique générée à partir de (c) et (d) par conversion de la vapeur excédentaire en puissance électrique dans des générateurs entraînés par turbine à vapeur à au moins l'une de l'usine d'hydrogène et de l'usine d'azote, lorsque cela est nécessaire, et un réseau de vapeur configuré pour produire de la vapeur et stocker de la puissance thermique et comprenant des générateurs de vapeur, une chaudière électrique auxiliaire à vapeur et une chaudière solaire à vapeur destinées au démarrage et à l'alimentation en vapeur du réseau de vapeur de l'usine, lorsque cela est nécessaire, et dans lequel la vapeur excédentaire provenant des usines et des générateurs de vapeur est stockée dans une usine de stockage de puissance thermique.

12. Le système tel que revendiqué dans la revendication 11, dans lequel l'électrolyseur est sélectionné entre les électrolyseurs à membrane électrolytique polymère, les électrolyseurs alcalins et les électrolyseurs à oxyde solide.

13. Le système tel que revendiqué dans l'une quelconque des revendications précédentes 11-12, dans lequel l'usine d'hydrogène comprend un stockage d'hydrogène configuré pour stocker l'excédent d'hydrogène.

14. Le système tel que revendiqué dans l'une quelconque des revendications précédentes 11-13, dans lequel l'usine d'azote comprend un stockage d'azote liquide configuré pour stocker l'excédent d'azote.

15. Le système tel que revendiqué dans l'une quelconque des revendications précédentes 11-14, dans lequel l'usine d'ammoniac comprend un stockage d'ammoniac configuré pour stocker l'excédent d'ammoniac.

16. Le système tel que revendiqué dans l'une quelconque des revendications précédentes 11-15, dans lequel l'usine d'acide nitrique comprend un stockage d'acide nitrique configuré pour stocker l'excédent d'acide nitrique.
